# EUROPÄISCHE PATENTANMELDUNG

(11) **EP 3 651 263 A1**
(43) Veröffentlichungstag der Anmeldung: **13.05.2020**
(21) Anmeldenummer: 18205266.2
(22) Anmeldetag: 08.11.2018
(51) Int. Cl.: H01M 10/6569

(54) **ENERGIESPEICHERSYSTEM**

(71) Anmelder: TI Automotive Engineering Centre (Heidelberg) GmbH, 69123 Heidelberg (DE)
(72) Erfinder: Winter, Matthias, 68535 Edingen-Neckarhausen (DE)
(74) Vertreter: Reiser & Partner Patentanwälte mbB

(57) **Zusammenfassung**

Energiespeichersystem (1), umfassend ein Gehäuse (2), in welchem zumindest eine Energiespeicherzelle (3) angeordnet ist, wobei die Energiespeicherzelle zumindest teilweise von Temperierflüssigkeit (6) umgeben ist, wobei die Temperierflüssigkeit (6) zur Temperierung der Energiespeicherzelle (3) zumindest teilweise einen Phasenwechsel durchläuft, wobei die Energiespeicherzelle (3) zumindest eine Wand (8) aufweist, welche zumindest teilweise in die Temperierflüssigkeit (6) eintaucht, wobei die Wand (8) zumindest teilweise mit einer kapillaraktiven Schicht (9) versehen ist.

## Beschreibung

Die Erfindung betrifft ein Energiespeichersystem, umfassend ein Gehäuse, in welchem zumindest eine Energiespeicherzelle angeordnet ist, wobei die Energiespeicherzelle zumindest teilweise von Temperierflüssigkeit umgeben ist, wobei die Temperierflüssigkeit zur Temperierung der Energiespeicherzelle zumindest teilweise einen Phasenwechsel durchläuft, wobei die Energiespeicherzelle zumindest eine Wand aufweist, welche zumindest teilweise in die Temperierflüssigkeit eintaucht.

Ein derartiges Energiespeichersystem eignet sich insbesondere für stationäre Systeme und für den Einsatz in mobilen Systemen, beispielsweise in Fahrzeugen mit rein elektrischem oder ergänzend elektrifiziertem Antrieb. Ein in derartigen Systemen häufig eingesetztes Energiespeichersystem umfasst wiederaufladbare Speicher in Form von Akkumulatoren, wobei Lithium-Ionen-Akkumulatoren besonders häufig eingesetzt werden. Derartige Akkumulatoren weisen zumeist mehrere Energiespeicherzellen auf, welche gemeinsam in einem Gehäuse verbaut sind. Dabei bildet das Gehäuse, welches mehrere Energiespeicherzellen aufnimmt, ein Energiespeichermodul.

Elektrochemische Akkumulatoren, wie beispielsweise Lithium-Ionen-Akkumulatoren, weisen die höchstmögliche Kapazität nur in einem kleinen Temperaturspektrum auf. Daher ist es, je nach Umgebungsbedingungen, erforderlich, die in dem Gehäuse angeordneten Energiespeicherzellen zu kühlen oder auch zu erwärmen. Hierzu ist es beispielsweise aus der WO 2010/086167 A1 bekannt, das Gehäuse, in welchem die Energiespeicherzellen angeordnet sind, zumindest teilweise mit Temperierflüssigkeit zu befüllen. Zur Kühlung nimmt die Temperierflüssigkeit von den Energiespeicherzellen emittierte Wärme auf und führt diese in Richtung einer Wärmesenke ab. Der Wärmetransport der Temperierflüssigkeit erhöht sich dadurch, dass sich die Temperierflüssigkeit während der Wärmeaufnahme erwärmt und zumindest teilweise verdampft.

Der Erfindung liegt die Aufgabe zugrunde, das Energiespeichersystem dahingehend zu verbessern, dass die Temperierung der Energiespeicherzelle verbessert ist.

Diese Aufgabe wird mit den Merkmalen von Anspruch 1 gelöst. Auf vorteilhafte Ausgestaltungen nehmen die Unteransprüche Bezug.

Das Energiespeichersystem zur Lösung der Aufgabe umfasst ein Gehäuse, in welchem zumindest eine Energiespeicherzelle angeordnet ist, wobei die Energiespeicherzelle zumindest teilweise von Temperierflüssigkeit umgeben ist, wobei die Temperierflüssigkeit zur Temperierung der Energiespeicherzelle zumindest teilweise einen Phasenwechsel durchläuft, wobei die Energiespeicherzelle eine Wand aufweist, welche zumindest teilweise in die Temperierflüssigkeit eintaucht, wobei die Wand zumindest teilweise mit einer kapillaraktiven Schicht versehen ist.

Dabei kann das Energiespeichersystem so ausgebildet sein, dass das Gehäuse mit der darin angeordneten Energiespeicherzelle und der Temperierflüssigkeit abgeschlossen ist. Zur Temperierung der Energiespeicherzelle steigt die Temperierflüssigkeit in der kapillaraktiven Schicht auf und verdampft dabei zumindest teilweise. Dabei nimmt die verdampfende Temperierflüssigkeit Wärmeenergie auf und kühlt die Energiespeicherzelle.

Ist das Energiespeichersystem als Energiespeichermodul ausgebildet, sind in dem Gehäuse mehrere Energiespeicherzellen angeordnet. Diese können nebeneinander stehend auf dem Boden des Gehäuses angeordnet sein. Die Temperierflüssigkeit nimmt von den Energiespeicherzellen emittierte Wärme auf, wobei zur Verbesserung des Wärmeübergangs die Temperierflüssigkeit zumindest teilweise verdampfen kann. Die die Energiespeicherzellen umgebende kapillaraktive Schicht bewirkt, dass die Temperierflüssigkeit auch Bereiche der Energiespeicherzellen erreicht, welche nicht unmittelbar in die Temperierflüssigkeit eintauchen.

Die dampfförmige Temperierflüssigkeit schlägt sich an der Innenwand des Gehäuses nieder und kondensiert dort. Dabei gibt die Temperierflüssigkeit Wärmeenergie an das Gehäuse ab und sammelt sich wieder im Bodenbereich des Gehäuses an.

Die in dem Gehäuse angeordneten Energiespeicherzellen sind jeweils zumindest teilweise von Temperierflüssigkeit umgeben. Die kapillaraktive Schicht, welche zumindest an einem Teil der Wand der Energiespeicherzellen angeordnet ist, bewirkt, dass Temperierflüssigkeit in der kapillaraktiven Schicht aufsteigt, dort verdampft und dampfförmig von den Energiespeicherzellen entweicht. Dadurch verbessert sich die Kühlleistung, darüber hinaus benetzt die Temperierflüssigkeit einen größeren Anteil der Wand der Energiespeicherzellen, ohne dass es dafür erforderlich ist, eine größere Menge Temperierflüssigkeit in das Gehäuse einzufüllen. Daraus ergibt sich wiederum eine Gewichts- und Kostenersparnis.

Die kapillaraktive Schicht kann in Form einer Beschichtung auf die Außenwand der Energiespeicherzellen aufgebracht sein. Dabei ist die kapillaraktive Schicht fest mit der Außenwand verbunden, was den Wärmeübergang verbessert.

Alternativ kann die kapillaraktive Schicht ein textiles Gebilde umfassen, welches an der Außenwand der Energiespeicherzellen angeordnet ist. Die kapillaraktive Schicht verbessert den Transport der Temperierflüssigkeit entlang der Außenwand der Energiespeicherzelle und unterstützt den Verdampfungsvorgang.

Die für die kapillaraktive Schicht verwendeten Materialien sind dabei vorzugsweise so gewählt, dass diese beständig gegenüber der Temperierflüssigkeit sind und den im Bereich der Energiespeicherzelle auftretenden Temperaturen dauerhaft standhalten. Der Wärmetransport von der Energiespeicherzelle in die Temperierflüssigkeit verbessert sich, wenn die kapillaraktive Schicht eine hohe Wärmeleitfähigkeit aufweist.

Die Schicht kann als offenzelliger Schaumstoff ausgebildet sein. Das Ausgangsmaterial ist dabei ein Kunststoff, welcher einerseits den Temperaturbedingungen des Energiespeichersystems standhält und andererseits auch resistent ist gegenüber dem eingesetzten Medium für die Temperierflüssigkeit. Bei einem offenzelligen Schaumstoff sind die Zellwände nicht geschlossen, so dass die Temperierflüssigkeit durch die Zellwände hindurch aufsteigen kann.

Gemäß einer alternativen Ausgestaltung könnte die Schicht auch aus einem textilen Gebilde ausgebildet sein. Ein besonders vorteilhaftes textiles Flächengebilde ist dabei ein Vliesstoff aus einem Kunststoffmaterial. Textile Flächengebilde sind aus Fasern zusammengesetzt, wobei sich zwischen den Fasern Hohlräume ausbilden, welche zur Aufnahme von Temperierflüssigkeit geeignet sind.

Es ist darüber hinaus denkbar, dass die Schicht aus einer Kombination aus einer Beschichtung und einem textilen Gebilde ausgeführt ist.

Die Energiespeicherzelle kann als Rundzelle, als Pouch-Zelle oder als prismatische Zelle ausgebildet sein. Die am häufigsten verwendete Form ist die Rundzelle, welche auch als zylindrische Zelle bezeichnet wird. Bei einer derartigen Energiespeicherzelle sind die Elektroden zu einem Wickel aufgerollt und zu einem zylindrisch ausgebildeten Gehäuse angeordnet. Aufgrund des zylindrischen Aufbaus weist eine Rundzelle eine vergleichsweise geringe Oberfläche auf, so dass bei einer derartigen Energiespeicherzelle die Anforderungen an die Kühlung besonders groß sind.

Durch die kapillaraktive Schicht verbessert sich insbesondere bei Rundzellen die Kühlleistung deutlich.

Prismatische Zellen sind quaderförmig ausgebildet und weisen daher im Vergleich zu Rundzellen eine vergrößerte Oberfläche auf.

Bei Pouch-Zellen besteht das Gehäuse zumeist aus einer mit Kunststoff beschichteten Aluminiumfolie. Pouch-Zellen weisen nur eine sehr geringe mechanische Stabilität auf, so dass hier insbesondere bei hohen Energiedichten eine wirksame Kühlung besonders wichtig ist.

Die kapillaraktive Schicht kann dabei den zylindrischen Mantel der als Rundzelle ausgebildeten Speicherzelle zumindest teilweise umgeben. Ist die Energiespeicherzelle als Pouch-Zelle oder als prismatische Zelle ausgebildet, bedeckt die kapillaraktive Schicht zumindest eine Seitenwand zumindest teilweise. Dabei ist jeweils denkbar, dass die kapillaraktive Schicht den zylindrischen Mantel und die beiden die Hauptseiten bildenden Seitenwände der Pouch-Zelle oder der prismatischen Zelle bedeckt. Dadurch ist es möglich, dass die Temperierflüssigkeit nahezu die vollständige Oberfläche der Energiespeicherzelle erreicht, so dass eine vollflächige Kühlung der Energiespeicherzelle möglich ist.

Die Einrichtung kann eine Sprüheinrichtung zum Versprühen von Temperierflüssigkeit aufweisen. Die Sprüheinrichtung bewirkt, dass die Temperierflüssigkeit in Form von Sprühnebel, also in Form kleinster Tröpfchen, auf die Energiespeicherzelle gelangt, dabei von der kapillaraktiven Schicht aufgenommen wird und verdampft. Daraus ergeben sich ein besonders großer Wärmeübergang und eine große Wärmeübertragungsleistung von der Energiespeicherzelle in Richtung der Temperierflüssigkeit.

Zur Temperierung des Energiespeichersystems kann eine Struktur vorgesehen sein. Dabei kann die Struktur zum Temperieren mindestens eines Teiles der Gehäusewand des Gehäuses ausgebildet sein.

Zur Verbesserung der Kühlleistung kann das Energiespeichersystem eine Struktur zum Temperieren der äußeren Wand des Gehäuses aufweisen. Die Temperierflüssigkeit gibt im Zuge der Kondensation an der Innenseite der Wand Wärme an das Gehäuse ab, welche wiederum von der Struktur aufgenommen und von der Wand abgeleitet wird.

Eine derartige Struktur kann beispielsweise durch Kühlrippen realisiert sein, welche auf der Wand des Gehäuses angebracht sind. Des Weiteren ist es denkbar, dass eine Kühlflüssigkeit oder auch ein Dampf auf der Außenseite des Gehäuses entlanggeführt wird. Dazu können in die Wand des Gehäuses Kanäle eingebracht sein, in welchen die Kühlflüssigkeit strömt. Die Kühlflüssigkeit kann dabei jeweils in einem Kreislauf geführt sein.

Durch die Struktur kann die Temperatur der Wand des Gehäuses und dadurch indirekt auch die Wärmeübertragung durch die im Inneren des Gehäuses angeordnete Temperierflüssigkeit beeinflusst werden. Bei einer Änderung der Temperatur der Wand ändert sich die Verdampfungs-, bzw. Kondensationstemperatur der Temperierflüssigkeit und damit der Druck im Inneren des Gehäuses. Dadurch kann die Wärmeübertragung des Gesamtsystems über eine Änderung der Temperatur der Wand variiert werden. Beispielsweise kann durch Absenken der Temperatur der Innendruck im Inneren des Gehäuses abgesenkt werden, was das Verdampfen von Temperierflüssigkeit fördert, wodurch wiederum die Kühlleistung der Einrichtung steigt. Durch Erhöhen der Temperatur kann der Innendruck im Inneren des Gehäuses auch erhöht werden, um die Kühlleistung zu reduzieren. Alternativ kann eine Beeinflussung der Wärmeübertragung auch über eine Änderung des Durchflusses der Kühlflüssigkeit erfolgen.

Das Gehäuse ist vorzugsweise luft- bzw. gasdicht abgeschlossen. Ein vorteilhafter Druck im Inneren des Gehäuses liegt im Bereich von etwa 0,5 bar bis 1 bar. Vorteilhafte Temperierflüssigkeiten verdampfen in diesem Druckbereich bei Temperaturen zwischen 25 °C und 40 °C. Derartige Temperierflüssigkeiten sind beispielsweise auf Fluorketonen basierende Flüssigkeiten, welche beispielsweise unter der Bezeichnung Novec von der 3M Deutschland GmbH kommerziell erhältlich sind.

Im Inneren des Gehäuses herrscht vorzugsweise nahezu eine Reinstoffatmosphäre. Das bedeutet, dass fast nur Temperierflüssigkeit in Dampfform und Flüssigkeitsform und keine oder nur sehr wenig Umgebungsluft im Gehäuse enthalten ist.

Es ist ferner denkbar, dass die Struktur zur Temperierung des Energiespeichersystems eine Heizeinrichtung aufweist, welche dazu dient, die Kühlflüssigkeit zu erwärmen. Die Heizeinrichtung ist insofern vorzugsweise außerhalb des Gehäuses angeordnet. Durch die Heizeinrichtung kann die Kühlflüssigkeit erwärmt werden, wobei die Kühlflüssigkeit über die Wand und/oder den Boden Wärme an die Temperierflüssigkeit abgibt und dadurch an der beheizten Oberfläche verdampft. In diesem Fall erfolgt eine Kondensation der Temperierflüssigkeit an der im Verhältnis zur beheizten Oberfläche kälteren Energiespeicherzelle, so dass die Temperierflüssigkeit die Energiespeicherzelle erwärmt. Dies ist insbesondere bei kalten Umgebungstemperaturen vorteilhaft.

Einige Ausgestaltungen des erfindungsgemäßen Energiespeichersystems werden nachfolgend anhand der Figuren näher erläutert. Die Figuren zeigen, jeweils schematisch:
- Fig. 1: ein Energiespeichersystem im Schnitt;
- Fig. 2: ein Energiespeichersystem mit einer Sprüheinrichtung.

Die Figuren zeigen ein Energiespeichersystem 1, umfassend ein Gehäuse 2, in welchem mehrere Energiespeicherzellen 3 in Form von Rundzellen angeordnet sind. Das Gehäuse 2 weist einen Boden 11 auf, auf welchem die Energiespeicherzellen 3 angeordnet sind. Die Energiespeicherzellen 3 sind nebeneinander und stehend auf dem Boden 11 des Gehäuses 2 angeordnet. In dem Gehäuse 2 befindet sich eine Temperierflüssigkeit 6, welche sich im Bereich des Bodens 11 ansammelt, wobei die Energiespeicherzellen 3 teilweise in die Temperierflüssigkeit 6 eintauchen.

Die zylindrischen Wände 8 der Energiespeicherzellen 3 sind mit einer kapillaraktiven Schicht 9 versehen. Die kapillaraktive Schicht 9 ist vorliegend aus einer Beschichtung ausgebildet. Gemäß einer alternativen Ausgestaltung ist die kapillaraktive Schicht 9 aus einem textilen Gebilde, vorzugsweise einem Vliesstoff, ausgebildet.

Gemäß einer alternativen Ausgestaltung sind in dem Gehäuse 2 Energiespeicherzellen 3 in Form von prismatischen Zellen oder in Form von Pouch-Zellen angeordnet.

Sind die Energiespeicherzellen 3 als Pouch-Zellen oder als prismatische Zellen ausgebildet, bedeckt die Schicht 9 zumindest die beiden die Hauptseiten bildenden Seitenwände 10 der Energiespeicherzellen 3.

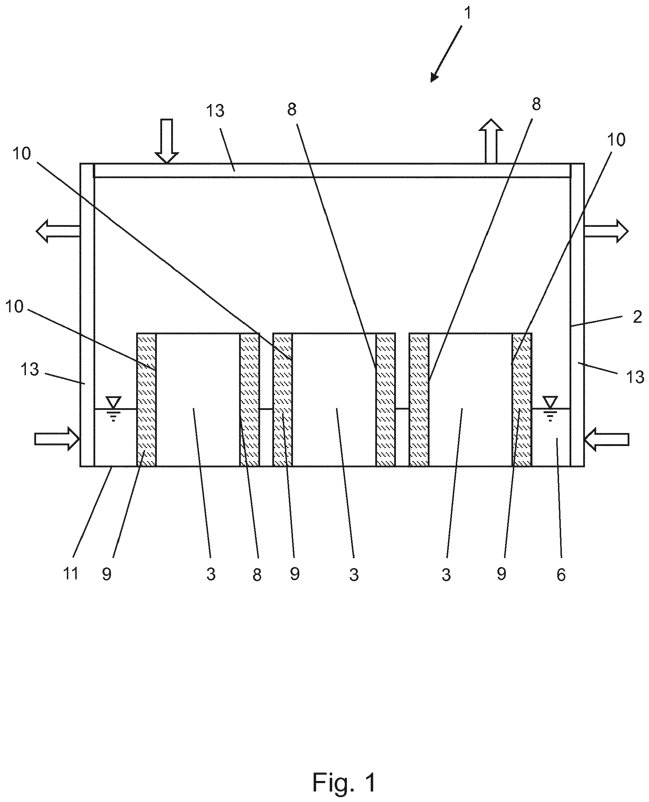

Figur 1 zeigt im Schnitt ein Energiespeichersystem 1 wie zuvor beschrieben. Das Gehäuse 2 nimmt Energiespeicherzellen 3 auf, wobei die Energiespeicherzellen 3 auf dem Boden 11 des Gehäuses 2 aufgestellt sind. Das Gehäuse 2 nimmt ferner Temperierflüssigkeit 6 auf, wobei die Menge der Temperierflüssigkeit 6 so gewählt ist, dass die Energiespeicherzellen 3 teilweise in die Temperierflüssigkeit 6 eintauchen.

Die kapillaraktive Schicht 9, welche den Energiespeicherzellen 3 zugeordnet ist, bewirkt, dass Temperierflüssigkeit 6 entlang der Wände 8, beispielsweise der zylindrischen Mäntel 10 der Rundzellen, aufsteigt und dort verdampft. Die verdampfte Temperierflüssigkeit 6 schlägt sich an der Innenwand des Gehäuses 2 nieder und kondensiert dort. Die dabei entstehende Kondensationswärme wird über eine außerhalb des Gehäuses 2 entlanggeführte Kühlflüssigkeit aufgenommen und von dem Gehäuse 2 abgeführt. Dazu ist die Gehäusewand des Gehäuses 2 mit einer Struktur 13 in Form Kanälen versehen, in welchen die Kühlflüssigkeit zirkuliert. Die Struktur 13 beeinflusst die Temperatur der Gehäusewand des Gehäuses 2 und damit indirekt die Kühlleistung der mit der Innenseite der Gehäusewand interagierenden Temperierflüssigkeit 6.

Die kondensierte Temperierflüssigkeit 6 gelangt wieder in den Bereich des Bodens 11 des Gehäuses 2 und kann dort erneut verdampfen. Daraus entsteht innerhalb des geschlossenen Gehäuses 2 ein Kreislauf der Temperierflüssigkeit 6, wobei die Temperierflüssigkeit 6 von den Energiespeicherzellen 3 emittierte Wärme aufnimmt und über die Wand des Gehäuses 2 an außerhalb entlanggeführte Kühlflüssigkeit abgibt. Die Kühlflüssigkeit ist dabei Teil eines Kühlkreislaufs.

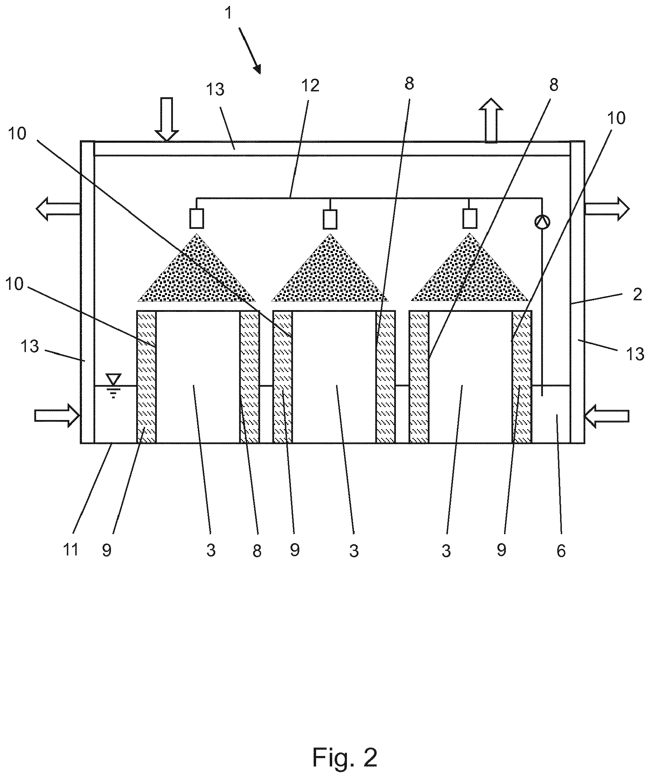

Figur 2 zeigt ein Energiespeichersystem 1, bei welchem die Einrichtung 4 mit einer Sprüheinrichtung 12 zum Versprühen von Temperierflüssigkeit 6 versehen ist. Die Sprüheinrichtung 12 ist dabei den Energiespeicherzellen 3 zugeordnet und versprüht Temperierflüssigkeit 6 auf die Bereiche der Energiespeicherzellen 3, welche nicht unmittelbar von Temperierflüssigkeit 6 umgeben sind.

## Patentansprüche

1. Energiespeichersystem (1), umfassend ein Gehäuse (2), in welchem zumindest eine Energiespeicherzelle (3) angeordnet ist, wobei die Energiespeicherzelle zumindest teilweise von Temperierflüssigkeit (6) umgeben ist, wobei die Temperierflüssigkeit (6) zur Temperierung der Energiespeicherzelle (3) zumindest teilweise einen Phasenwechsel durchläuft, wobei die Energiespeicherzelle (3) zumindest eine Wand (8) aufweist, welche zumindest teilweise in die Temperierflüssigkeit (6) eintaucht, **dadurch gekennzeichnet, dass** die Wand (8) zumindest teilweise mit einer kapillaraktiven Schicht (9) versehen ist.

2. Energiespeichersystem nach Anspruch 1, **dadurch gekennzeichnet, dass** die kapillaraktive Schicht (9) aus einer Beschichtung ausgebildet ist.

3. Energiespeichersystem nach Anspruch 1 oder 2, **dadurch gekennzeichnet, dass** die kapillaraktive Schicht (9) ein textiles Gebilde umfasst.

4. Energiespeichersystem nach einem der Ansprüche 1 bis 3, **dadurch gekennzeichnet, dass** die kapillaraktive Schicht (9) einen offenzelligen Schaumstoff umfasst.

5. Energiespeichersystem nach einem der Ansprüche 1 bis 4, **dadurch gekennzeichnet, dass** die Energiespeicherzelle (3) als Rundzelle, als Pouch-Zelle oder als prismatische Zelle ausgebildet ist.

6. Energiespeichersystem nach Anspruch 5, **dadurch gekennzeichnet, dass** die kapillaraktive Schicht (9) zumindest teilweise den zylindrischen Mantel (10) der als Rundzelle ausgebildeten Energiespeicherzelle (3) umgibt.

7. Energiespeichersystem nach Anspruch 5, **dadurch gekennzeichnet, dass** die kapillaraktive Schicht (9) zumindest eine Seitenwand der als Pouch-Zelle oder als prismatische Zelle ausgebildeten Energiespeicherzelle (3) zumindest teilweise bedeckt.

8. Energiespeichersystem nach einem der Ansprüche 1 bis 7, **dadurch gekennzeichnet, dass** die Einrichtung (4) eine Sprüheinrichtung (12) zum Versprühen von Temperierflüssigkeit (6) aufweist.

9. Energiespeichersystem nach einem der Ansprüche 1 bis 8, **dadurch gekennzeichnet, dass** eine Struktur (13) zum Temperieren des Energiespeichersystems (1) vorgesehen ist.

10. Energiespeichersystem nach Anspruch 9, **dadurch gekennzeichnet, dass** die Struktur (13) zum Temperieren mindestens eines Teiles der Gehäusewand des Gehäuses (2) ausgebildet ist.

11. Energiespeichersystem nach einem der Ansprüche 9 bis 10, **dadurch gekennzeichnet, dass** die Struktur (13) ausgebildet ist, die Kühlleistung der Temperierflüssigkeit (6) zu beeinflussen.

## Geänderte Patentansprüche

### Geänderte Patentansprüche gemäss Regel 137(2) EPÜ.

1. Energiespeichersystem (1), umfassend ein Gehäuse (2), in welchem zumindest eine Energiespeicherzelle (3) angeordnet ist, wobei die Energiespeicherzelle zumindest teilweise von Temperierflüssigkeit (6) umgeben ist, wobei die Temperierflüssigkeit (6) zur Temperierung der Energiespeicherzelle (3) zumindest teilweise einen Phasenwechsel durchläuft, wobei die Energiespeicherzelle (3) zumindest eine Wand (8) aufweist, welche zumindest teilweise in die Temperierflüssigkeit (6) eintaucht, wobei die Wand (8) zumindest teilweise mit einer kapillaraktiven Schicht (9) versehen ist, **dadurch gekennzeichnet, dass** eine Einrichtung (4) vorgesehen ist, welche eine Sprüheinrichtung (12) zum Versprühen von Temperierflüssigkeit (6) aufweist.

2. Energiespeichersystem nach Anspruch 1, **dadurch gekennzeichnet, dass** die kapillaraktive Schicht (9) aus einer Beschichtung ausgebildet ist.

3. Energiespeichersystem nach Anspruch 1 oder 2, **dadurch gekennzeichnet, dass** die kapillaraktive Schicht (9) ein textiles Gebilde umfasst.

4. Energiespeichersystem nach einem der Ansprüche 1 bis 3, **dadurch gekennzeichnet, dass** die kapillaraktive Schicht (9) einen offenzelligen Schaumstoff umfasst.

5. Energiespeichersystem nach einem der Ansprüche 1 bis 4, **dadurch gekennzeichnet, dass** die Energiespeicherzelle (3) als Rundzelle, als Pouch-Zelle oder als prismatische Zelle ausgebildet ist.

6. Energiespeichersystem nach Anspruch 5, **dadurch gekennzeichnet, dass** die kapillaraktive Schicht (9) zumindest teilweise den zylindrischen Mantel (10) der als Rundzelle ausgebildeten Energiespeicherzelle (3) umgibt.

7. Energiespeichersystem nach Anspruch 5, **dadurch gekennzeichnet, dass** die kapillaraktive Schicht (9) zumindest eine Seitenwand der als Pouch-Zelle oder als prismatische Zelle ausgebildeten Energiespeicherzelle (3) zumindest teilweise bedeckt.

8. Energiespeichersystem nach einem der Ansprüche 1 bis 7, **dadurch gekennzeichnet, dass** eine Struktur (13) zum Temperieren des Energiespeichersystems (1) vorgesehen ist.

9. Energiespeichersystem nach Anspruch 8, **dadurch gekennzeichnet, dass** die Struktur (13) zum Temperieren mindestens eines Teiles der Gehäusewand des Gehäuses (2) ausgebildet ist.

10. Energiespeichersystem nach Anspruch 8 oder 9, **dadurch gekennzeichnet, dass** die Struktur (13) ausgebildet ist, die Kühlleistung der Temperierflüssigkeit (6) zu beeinflussen.
